# EUROPÄISCHE PATENTSCHRIFT

(11) **EP 1 449 084 B1**
(45) Veröffentlichungstag und Bekanntmachung des Hinweises auf die Patenterteilung: **10.04.2013**
(21) Anmeldenummer: 02790306.1
(22) Anmeldetag: 29.10.2002
(51) Int. Cl.: G06F 21/00

(54) **KONTROLLIERTE PROGRAMMAUSFÜHRUNG DURCH EINEN TRAGBAREN DATENTRÄGER**
CONTROLLED PROGRAM EXECUTION BY A PORTABLE DATA CARRIER
EXECUTION CONTROLEE D'UN PROGRAMME PAR UN SUPPORT DE DONNEES PORTABLE

(30) Priorität: 16.11.2001 DE 10156394
(43) Veröffentlichungstag der Anmeldung: 25.08.2004
(73) Patentinhaber: Giesecke & Devrient GmbH, 81677 München (DE)
(72) Erfinder: WEISS, Dieter, 81677 München (DE)
(86) Internationale Anmeldenummer: PCT/EP2002/012074
(87) Internationale Veröffentlichungsnummer: WO 2003/042547

(56) Entgegenhaltungen:
- EP-A- 1 056 012
- WO-A-00/54155
- US-A- 5 732 272
- US-B1- 6 353 924

## Beschreibung

Die Erfindung betrifft allgemein das technische Gebiet der Programmausführung durch einen tragbaren Datenträger, der einen Programmspeicher mit mindestens einem Programm und einen Prozessorkern zur Ausführung dieses Programms aufweist. Ein derartiger tragbarer Datenträger kann insbesondere eine Chipkarte in unterschiedlichen Bauformen oder ein Chipmodul sein. Spezieller betrifft die Erfindung die kontrollierte Programmausführung, um Störungen oder Angriffe zu erkennen und eine geeignete Fehlerbehandlung einzuleiten.

Bei vielen Techniken zum Angriff auf tragbare Datenträger wird der normale Programmablauf durch externe Beeinflussung gestört. Derartige Störungen können insbesondere durch Spannungsimpulse, Einwirkung von Wärme oder Kälte, elektrische oder magnetische Felder, elektromagnetische Wellen oder Teilchenstrahlung verursacht werden. Beispielsweise ist es möglich, durch Lichtblitze auf den freigelegten Halbleiterchip des tragbaren Datenträgers Registerinhalte im Prozessorkern zu manipulieren. Durch eine solche Lichtattacke kann möglicherweise der Programmzähler modifiziert werden, um zu bewirken, daß der tragbare Datenträger entgegen der in ihn eingespeicherten Programmierung vertrauliche Daten aus einem Ein-/Ausgabepuffer aussendet.

Aus der europäischen Patentanmeldung EP 1056 012 A2 ist eine Vorrichtung zur Ansteuerung eines Türschloßmotors in einem Fahrzeug bekannt, bei der ein Steuerprozessor mehrere Unterprogramme nacheinander ausführt, wobei nach jedem Unterprogramm ein Zähler inkrementiert wird. Nach der Ausführung der Unterprogramme wird überprüft, ob der Zählerstand der Anzahl der Unterprogramme entspricht.

Diese bekannte Vorrichtung betrifft jedoch nur ein fest in ein Fahrzeug eingebautes System. Eine weitergehende Verwendung, insbesondere in einem tragbaren Datenträger, ist nicht vorgesehen. Überdies ist bei dieser Vorrichtung nur ein streng sequentieller Ablauf aller Unterprogramme vorgesehen. Für komplexere Anwendungsfälle, bei denen gegebenenfalls einzelne Unterprogramme übersprungen werden sollen, eignet sich die aus der EP 1 056 012 A2 bekannte Lehre daher nicht.

Aus der US 5,732,272 A ist ein Verfahren zur Verfolgung der Ausführung von Unterprogrammen bekannt, das insbesondere zur Zeiterfassung bzw. zur Leistungsmessung dient. Die Erfassung einer Unterprogrammausführung erfolgt grundsätzlich durch Ausführung eines "Start Logs" zu Beginn und eines "Exit Logs" bei Abschluß der Programmausführung. Für den Fall, daß "Exit Logs" nicht mehr korrekt ausgeführt werden, werden Sicherungsmaßnahmen vorgesehen, die dennoch eine korrekte Erfassung der Unterprogrammausführung gewährleisten. Die bekannte Lösung ist aufgrund ihrer Komplexität für ressourcenbeschränkte Systeme nur bedingt geeignet.

US 6,353,924 A beschreibt ein Verfahren zur detaillierten Verfolgung der Ausführung von Programmen, um Fehler zu ermitteln. Den einzelne Blöcken eines zu verfolgenden Programmes werden dabei jeweils "Instrumentation Code"-Elemente angefügt, welche eine Blockidentifizierungsinformation enthalten, anhand derer die Ausführung des jeweiligen Blockes erfaßt wird. Zum raschen Erkennen von Manipulationsversuchen bei der Ausführung von Programmen ist die vorgeschlagene Lösung nur bedingt geeignet.

Aus der WO 00/54155 ist ein Verfahren zur Überwachung der korrekten Ausführung eines Programmes mit Hilfe einer zwischen einem Programmspeicher und einem Prozessor geschalteten Überwachungseinheit bekannt. Allen Programminstruktionen ist ein numerischer Wert zugeordnet, der von der Überwachungseinheit vor Ausführung durch den Prozessor erfaßt und gehasht wird. In die Hash-Operation wird der Hashwert der jeweils vorhergehenden Instruktion mit einbezogen. Es resultiert ein charakteristischer End-Hashwert, der mit einem Referenzwert verglichen wird. Das Verfahren ist sicher, erfordert aber die Ausführung von vergleichsweise aufwendigen Rechenoperationen zur Hashwert-Bildung.

Die Erfindung hat demgemäß die Aufgabe, die Probleme des Standes der Technik zumindest zum Teil zu vermeiden und ein Verfahren zur kontrollierten Programmausführung durch einen tragbaren Datenträger sowie einen tragbaren Datenträger zu schaffen, die einen zuverlässigen Schutz gegen Manipulationen des Programmzählerstandes bieten und sich auch zur Anwendung bei der Ausführung komplexer Programme eignen. In bevorzugten Ausgestaltungen soll ein besonders hoher Schutz bei geringem Aufwand erreicht werden.

Erfindungsgemäß wird diese Aufgabe ganz oder zum Teil gelöst durch ein Verfahren mit den Merkmalen des Anspruchs 1 und einen tragbaren Datenträger mit den Merkmalen des Anspruchs 10. Die abhängigen Ansprüche betreffen bevorzugte Ausgestaltungen der Erfindung.

Die Erfindung geht von der Grundidee aus, den korrekten Programmablauf durch einen Zustandszähler zu kontrollieren, der bei der Programmausführung mitgeführt wird. Das Programm weist mehrere kontrollierte Abschnitte auf, deren Abarbeitung jeweils zu einer Veränderung des Zustandszählers führt. Die kontrollierten Abschnitte brauchen nicht mit Unterprogrammen oder Programm-Modulen übereinzustimmen. An mindestens einem Prüfpunkt des Programms wird der Stand des Zustandszählers mit einem oder

Fortsetzung mit S. 3,1. Abs. der ursprünglichen Anmeldeunterlagen mehreren zulässigen Werten verglichen, und bei einer Abweichung erfolgt eine geeignete Fehlerbehandlung.

Erfindungsgemäß ist zumindest die Möglichkeit vorgesehen, daß das Programm mindestens einen Sprungbefehl aufweist, durch den ein oder mehrere kontrollierte Abschnitte übersprungen und somit nicht ausgeführt werden. In diesem Fall wird in Zusammenhang mit der Ausführung des Sprungbefehls der Stand des Zustandszählers so verändert, als ob die übersprungenen kontrollierten Abschnitte ausgeführt worden wären. Die Prüfung des Zustandszählerstandes kann dann zu einem späteren Zeitpunkt unabhängig von der Ausführung des Sprungbefehls vorgenommen werden. Auf diese Weise erhöht sich die Flexibilität bei der Gestaltung des auszuführenden Programms erheblich, ohne daß Einschränkungen hinsichtlich der Sicherheit vorgenommen werden müßten.

Der Zustandszähler kann als Register im Prozessorkern oder als Speicherbereich im Arbeitsspeicher des tragbaren Datenträgers ausgestaltet sein. In bevorzugten Ausführungsformen der Erfindung ist der Zustandszähler als differenzieller Zustandszähler ausgebildet, dessen Wert sich aus der Differenz zweier hardwaremäßig implementierter Zähler ergibt, die als Basiszähler und aktiver Zähler bezeichnet werden. Auf diese Weise wird vermieden, daß der Zustandszähler bei fortschreitendem Programmablauf stets ein und dieselbe Folge von Werten einnimmt. Die Verwendung eines differenziellen Zustandszählers erschwert damit die Ausspähung des eingesetzten Verfahrens und erhöht dessen Sicherheit. Der Basiszähler wird vorzugsweise regelmäßig dadurch initialisiert, daß er auf den jeweiligen Stand des aktiven Zählers gesetzt wird.

Prinzipiell unterliegt die Struktur des auszuführenden Programms keinen Einschränkungen. In bevorzugten Ausgestaltungen, die insbesondere für Chipkarten oder Chipmodule vorgesehen sind, ist jedoch die Grundstruktur des Programms eine Schleife, die einen Startabschnitt, mehrere kontrollierte Abschnitte und einen Aktionsabschnitt aufweist.

Vorzugsweise bewirkt der Startabschnitt das Einlesen eines externen Kommandos, die kontrollierten Abschnitte betreffen die Verarbeitung des Kommandos, und im Aktionsabschnitt wird eine Antwort ausgesendet. In diesem Fall befindet sich der Prüfpunkt, beziehungsweise einer der Prüfpunkte, wenn mehrere Prüfpunkte vorgesehen sind, vorzugsweise zwischen dem letzten kontrollierten Abschnitt und dem Aktionsabschnitt, so daß die Antwort nur dann ausgesandt wird, wenn die Prüfung des Zustandszählers keinen Hinweis auf eine Störung der Programmausführung ergeben hat. Unabhängig von der genannten Programmstruktur ist es ein allgemeines Merkmal bevorzugter Ausgestaltungen der Erfindung, vor jeder nach außen gerichteten Aktion des tragbaren Datenträgers einen Prüfpunkt vorzusehen.

Das Programm weist vorzugsweise ein oder mehrere nacheinander auszuführende Module auf, die ihrerseits jeweils mindestens einen kontrollierten Abschnitt enthalten. In manchen Ausgestaltungen besteht jedes Modul aus genau einem kontrollierten Abschnitt und gegebenenfalls einem Test, ob die Folgemodule ausgeführt oder übersprungen werden sollen. In anderen Ausgestaltungen enthalten zumindest manche der Module mehrere kontrollierte Abschnitte.

Eine weitere Steigerung der Überwachungstiefe wird erreicht, wenn zumindest eines der Module als kontrolliertes Modul mit mindestens einem modulinternen Prüfpunkt ausgestaltet ist. In diesem modulinternen Prüfpunkt kann entweder der Wert des Zustandszählers seit Beginn der Programmausführung beziehungsweise des aktuellen Schleifendurchlaufs auf Übereinstimmung mit einem oder mehreren vorgegebenen Werten untersucht werden, oder es kann die Veränderung des Zustandszählers seit Beginn der Modulausführung getestet werden. Im letztgenannten Fall wird vorzugsweise vor der ersten Veränderung des Zustandszählers im Modul der Stand des Zustandszählers oder ein damit zusammenhängender Wert, z.B. der Stand des aktiven Zählers, in einem lokalen Basiszähler zwischengespeichert.

Auf ähnliche Weise kann in weiteren Ausgestaltungen innerhalb eines Moduls oder innerhalb eines Abschnitts ein lokaler Zähler eingeführt werden, der unabhängig von dem globalen Zustandszähler den korrekten Programmablauf innerhalb des Moduls beziehungsweise innerhalb des Abschnitts überwacht. Der lokale Zähler kann gemäß den oben im Zusammenhang mit dem globalen Zustandszähler beschriebenen Techniken ausgestaltet sein, wobei insbesondere eine Ausführung als differenzieller lokaler Zähler möglich ist.

Vorzugsweise ist jeder Sprungbefehl, durch den kontrollierte Abschnitte übersprungen werden können, mit entsprechenden Befehlen zur Anpassung des Zustandszählers gekoppelt. Es sind jedoch auch Ausgestaltungen der Erfindung vorgesehen, bei denen einzelne Sprungbefehle nicht mit einer Anpassung des Zustandszählers einhergehen. In diesem Fall sind in der Regel mehrere zulässige Zählerstände an dem Prüfpunkt beziehungsweise den Prüfpunkten definiert. Da durch diese Maßnahme die Überwachungsgenauigkeit sinkt, wird sie jedoch vorzugsweise nur für die erwähnten lokalen Zustandszähler eingesetzt.

Der erfindungsgemäße tragbare Datenträger ist vorzugsweise als Chipkarte oder Chipmodul ausgebildet. Er weist in bevorzugten Ausgestaltungen Merkmale auf, die den gerade beschriebenen und/oder in den abhängigen Verfahrensansprüchen genannten Merkmalen entsprechen.

Weitere Merkmale, Vorteile und Aufgaben der Erfindung gehen aus der folgenden genauen Beschreibung mehrerer Ausführungsbeispiele und Ausführungsalternativen hervor. Es wird auf die schematischen Zeichnungen verwiesen, in denen zeigen:
Fig. 1 ein Blockdiagramm mit Funktionseinheiten eines tragbaren Datenträgers nach einem Ausführungsbeispiel der Erfindung,
Fig. 2 ein Flußdiagramm des Programmablaufs in dem Ausführungsbeispiel von Fig. 1,
Fig. 3 ein Flußdiagramm einer Ausführungsvariante von Fig. 2,
Fig. 4 ein Flußdiagramm des Programmablaufs in einem kontrollierten Modul gemäß einer weiteren Ausführungsvariante von Fig. 2, und
Fig. 5 ein Flußdiagramm des Programmablaufs in einem Abschnitt, der mehrere kontrollierte Unterabschnitte aufweist.

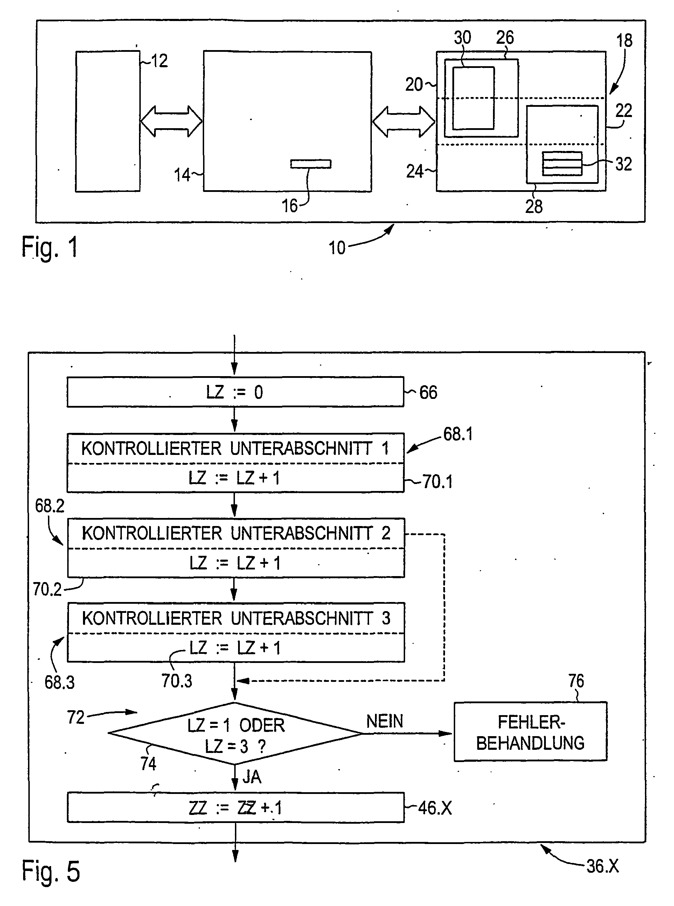

Der in Fig. 1 dargestellte tragbare Datenträger 10 ist im vorliegenden Ausführungsbeispiel als Chipkarte ausgebildet. Er weist eine Schnittstelle 12 zum kontaktlosen oder kontaktgebundenen Datenaustausch mit der Umgebung, einen Prozessorkern 14 mit einem Programmzähler 16 und einen Speicher 18 auf. Der Prozessorkern 14, der Speicher 18 und Teile der Schnittstelle 12 sind in der Regel auf einem einzigen Halbleiterchip integriert.

Der Speicher 18 weist mehrere Bereiche auf, die in unterschiedlichen Speichertechnologien ausgestaltet sind. Bei dem Ausführungsbeispiel von Fig. 1 sind dies ein beispielsweise als maskenprogrammiertes ROM (*read only memory*) ausgestalteter Nur-Lese-Speicher 20, ein in FLASH-Technologie ausgestalteter nichtflüchtiger Schreib-/ Lese-Speicher 22 und ein als RAM (*random access memory*) ausgestalteter flüchtiger Schreib-/Lese-Speicher 24. Konzeptuell enthält der Speicher 18 einen Programmspeicher 26, der sich in den Bereichen 20 und 22 befindet, und einen Arbeitsspeicher 28 in den Bereichen 22 und 24.

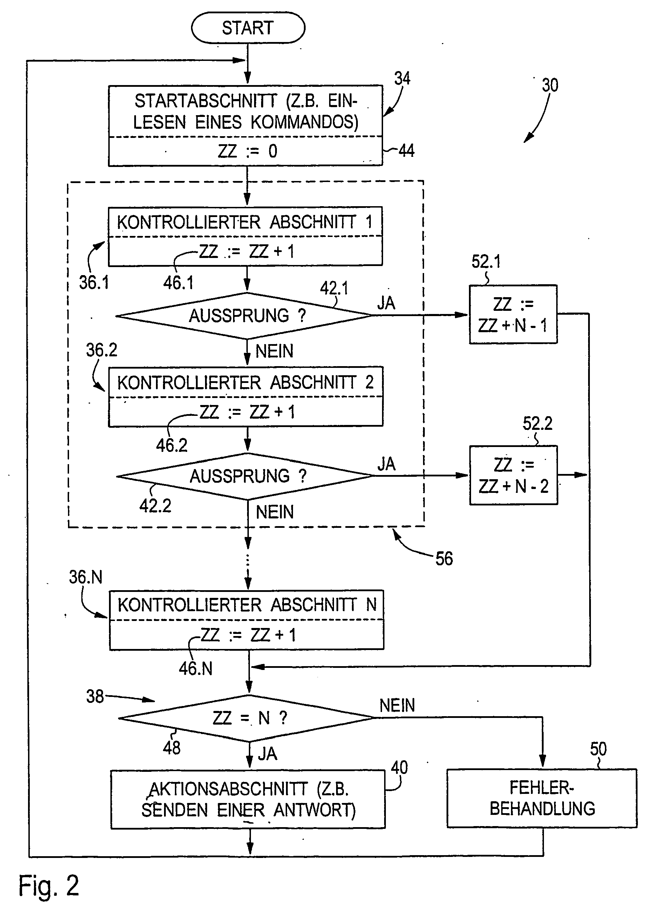

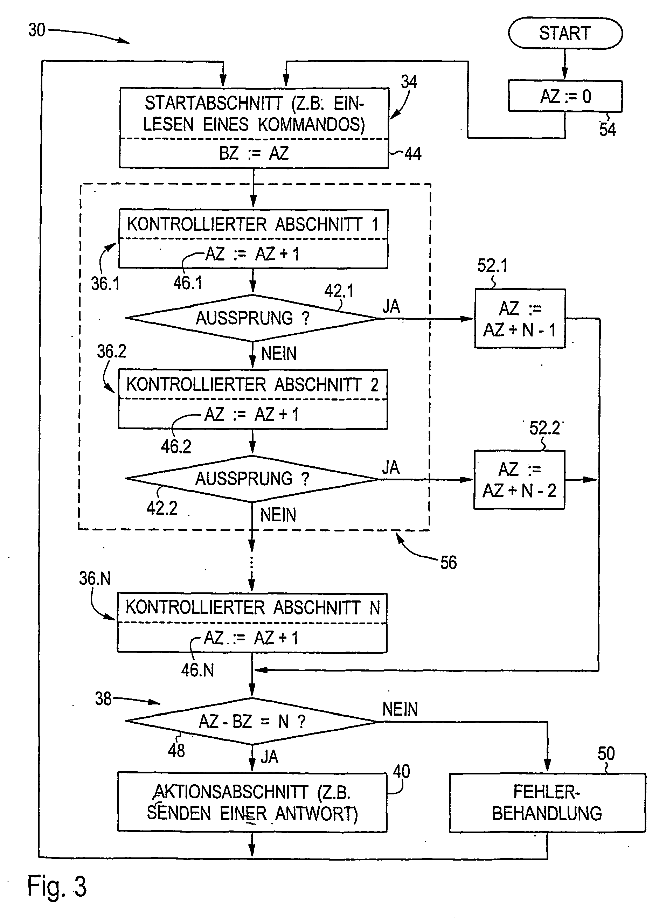

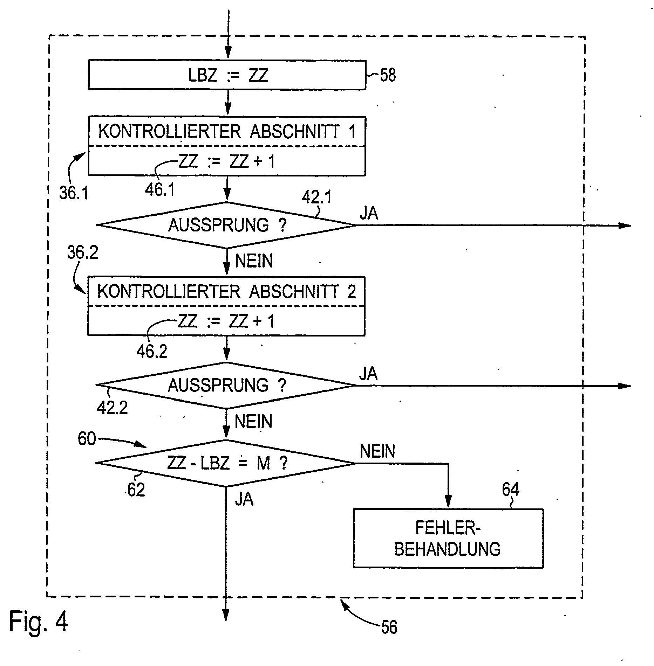

Der Programmspeicher 26 beinhaltet mehrere Programme, von denen in Fig. 1 eines angedeutet und mit dem Bezugszeichen 30 versehen ist. Im Arbeitsspeicher 28 sind Speicherwörter für mehrere Zähler 32 reserviert, und zwar bei dem Ausführungsbeispiel von Fig. 2 für einen Zustandszähler ZZ, bei dem Ausführungsbeispiel von Fig. 3 für einen aktiven Zähler AZ und einen Basiszähler BZ, bei der Abwandlung von Fig. 4 für den Zustandszähler ZZ und einen lokalen Basiszähler LBZ, und bei der Abwandlung von Fig. 5 für den Zustandszähler ZZ und einen lokalen Zähler LZ. In Ausführungsalternativen können diese Zähler sämtlich oder zum Teil statt im Arbeitsspeicher 28 auch als Register des Prozessorkerns 14 ausgestaltet sein oder in weiteren, in Fig. 1 nicht dargestellten Baugruppen des tragbaren Datenträgers 10 gespeichert werden.

Im vorliegenden Ausführungsbeispiel ist der Programmzähler 16 des Prozessorkerns 14 durch auf den Halbleiterchip gerichtete Lichtblitze beeinflußbar. Um dennoch eine daraus resultierende Angriffsmöglichkeit auf im Prozessorkern gehandhabte Daten auszuschließen, wird beim Programmablauf gemäß Fig. 2 der Zustandszähler ZZ als vom Programmzähler 16 unabhängiger Kontrollmechanismus während des Programmablaufs mitgeführt und jeweils vor dem Ausführen einer nach außen gerichteten Aktion auf Übereinstimmung mit einem vorgegebenen Zählerstand überprüft.

In dem Ausführungsbeispiel von Fig. 2 hat das Programm 30 die Struktur einer Endlosschleife, die einen Startabschnitt 34, mehrere, im folgenden zusammenfassend mit 36.x bezeichnete, kontrollierte Abschnitte 36.1, 36.2, ..., 36.N, einen Prüfpunkt 38 und einen Aktionsabschnitt 40 aufweist. Im Startabschnitt 34 wird beispielsweise ein von dem tragbaren Datenträger 10 zu verarbeitendes Kommando über die Schnittstelle 12 eingelesen. Die kontrollierten Abschnitte 36.x betreffen nacheinander ausgeführte Verarbeitungsstufen des Kommandos, in denen beispielsweise zunächst das Kommando auf Gültigkeit überprüft wird, dann eine Berechtigungsüberprüfung erfolgt, dann eine Überprüfung der Ausführbarkeit des Kommandos erfolgt, z.B. durch eine Prüfung, ob angeforderte Daten vorhanden sind, und schließlich das Kommando ausgeführt wird, indem z.B. angeforderte Daten in einen Ausgabepuffer geschrieben werden. Im Aktionsabschnitt 40 wird im vorliegenden Ausführungsbeispiel eine Antwort über die Schnittstelle 12 gesendet und dadurch entweder die erfolgreiche Ausführung des Kommandos oder ein Fehlschlagen der Kommandoausführung signalisiert.

Bei den oben beispielhaft genannten Funktionen der einzelnen kontrollierten Abschnitte 36.x können Fehlersituationen auftreten, die das Ausführen der in der Programmfolge späteren kontrollierten Abschnitte 36.x überflüssig machen. Wenn beispielsweise ein Kommando schon mangels Berechtigung nicht ausgeführt werden darf, so erübrigen sich die weiteren Verarbeitungsschritte. Es sind daher im Programmablauf, im folgenden zusammenfassend mit 42.x bezeichnete, Aussprungtests 42.1, 42.2, ... vorgesehen, in denen überprüft wird, ob die in der vorgesehenen Sequenz folgenden kontrollierten Abschnitte 36.x ausgeführt oder übersprungen werden sollen. Jeder Aussprungtest 42.x ist ein bedingter Sprungbefehl, der den Wert eines Aussprunganzeigers (*flag*) abfragt. Der Aussprunganzeiger wird seinerseits von dem jeweils vorhergehenden kontrollierten Abschnitt 36.x gesetzt, um anzuzeigen, daß ein Aussprung erfolgen soll. Einem kontrollierten Abschnitt 36.x braucht natürlich nur dann ein Aussprungtest 42.x zugeordnet zu sein, wenn sich der Wert des Aussprunganzeigers in diesem kontrollierten Abschnitt 36.x ändern kann.

Um den Programmablauf unabhängig vom Stand des Programmzählers 16 zu überprüfen und damit eine Lichtattacke erkennen zu können, wird der Zustandszähler ZZ eingesetzt. Der Zustandszähler ZZ wird im Zusammenhang mit der Ausführung des Startabschnitts 34 in einer Initialisierungsanweisung 44 auf einen Anfangswert gesetzt. Im Ausführungsbeispiel von Fig. 2 ist dies der Wert Null. Ferner enthält jeder kontrollierte Abschnitt 36.x eine Anweisung 46.x, in der der Zustandszähler ZZ verändert, nämlich im vorliegenden Ausführungsbeispiel um eine Einheit inkrementiert wird. Die Anweisung 46.x wird innerhalb jedes kontrollierten Abschnitts 36.x erst dann ausgeführt, wenn die von dem jeweiligen Abschnitt 36.x zu leistenden Operationen abgeschlossen sind; vorzugsweise ist die Anweisung 46.x jeweils der letzte Befehl jedes kontrollierten Abschnitts 36.x.

Insgesamt enthält somit der Zustandszähler ZZ - unter der Annahme, daß keine Aussprünge stattfinden - während des Programmablaufs einen Wert, der der Anzahl der ausgeführten kontrollierten Abschnitte 36.x entspricht. Im beispielhaften Ablauf von Fig. 2 wird diese Anzahl mit dem Wert N bezeichnet. Am Prüfpunkt 38 erfolgt daher ein Test 48, in dem festgestellt wird, ob der Stand des Zustandszählers ZZ den einzig zulässigen Wert N hat. Ist dies der Fall, so wird der Aktionsabschnitt 40 ausgeführt. Weist der Zustandszähler ZZ einen anderen Wert auf, so verzweigt die Programmausführung zu einer Routine zur Fehlerbehandlung 50.

Als Fehlerbehandlung 50 kann beispielsweise ein umfassendes Rücksetzen des tragbaren Datenträgers 10 oder sogar - bei wiederholtem Auftreten des Fehlers - eine Sperrung des tragbaren Datenträgers 10 erfolgen. Ferner kann eine geeignete Fehlermeldung über die Schnittstelle 12 versandt werden. Auf jeden Fall soll durch die Fehlerbehandlung 50 sichergestellt werden, daß keine möglicherweise bereits zur Ausgabe bereitgestellten Daten des tragbaren Datenträgers 10 über die Schnittstelle 12 nach außen gelangen.

Gemäß dem bisher beschriebenen Ablauf würde der Zustandszähler ZZ nicht den zulässigen Wert N aufweisen, wenn durch einen der Aussprungtests 42.x ein Sprung über einen oder mehrere kontrollierte Abschnitte 36.x veranlaßt worden wäre. Um auch in diesem Fall die korrekte Programmfunktion sicherzustellen, wird immer dann, wenn durch einen Aussprungtest 42.x kontrollierte Abschnitte 36.x übersprungen werden, eine entsprechende Korrekturanweisung 52.1, 52.2, nachfolgend zusammenfassend mit 52.x bezeichnet, durchgeführt. In jeder Korrekturanweisung 52.x wird der Zustandszähler ZZ so verändert, als ob die übersprungenen kontrollierten Abschnitte 36.x ausgeführt worden wären; im vorliegenden Fall wird der Zustandszähler ZZ in jeder Korrekturanweisung 52.x um die Anzahl der übersprungenen Abschnitte 36.x erhöht. Der Zustandszähler ZZ weist somit bei Erreichen des Prüfpunkts 38 auch dann den einzig zulässigen Wert N auf, wenn bei einem Schleifendurchlauf ein Aussprung erfolgt ist.

Im vorliegenden Ausführungsbeispiel wurde der Zustandszähler ZZ mit dem Wert Null initialisiert und bei der Abarbeitung jedes kontrollierten Abschnitts um eine Einheit erhöht. In alternativen Ausgestaltungen sind auch andere Initialisierungswerte und/oder andere Verfahren zur Veränderung des Zustandszählers vorgesehen. Beispielsweise kann der Zustandszähler ZZ in der Anweisung 44 mit dem Wert 1 oder N oder einem anderen Wert initialisiert werden. Desweiteren ist es möglich, in dem Fall, daß nach einem Aussprungtest 42.x kontrollierte Abschnitte 36.x übersprungen werden, den Zustandszähler ZZ ohne Korrektur weiterzuzählen und dafür den Wert N um die Zahl der übersprungenen Abschnitte 36.x zu dekrementieren. Die Korrekturanweisungen 52.1, 52.2 lauten dann N := 1 bzw. N := 2 usw. In den Anweisungen 46.x kann eine beliebige mathematische Operation vorgenommen werden, beispielsweise die Subtraktion einer Einheit oder eine bitweise Verschiebung oder Rotation. Natürlich muß in diesen Fällen der zulässige Wert in Test 48 entsprechend angepaßt werden.

Eine weitere Variante des Ablaufs von Fig. 2 ist in Fig. 3 dargestellt. Der Zustandszähler ZZ ist hier nicht unmittelbar als Zähler 32 im Arbeitsspeicher 28 implementiert. Vielmehr sind im Arbeitsspeicher 28 zwei Zähler 32 vorgesehen, nämlich der aktive Zähler AZ und der Basiszähler BZ. Durch diese Ausgestaltung des Zustandszählers ZZ als differenzieller Zähler wird vermieden, daß sich jedem Stand des Programmzählers 16 feste und stets gleiche Werte der Zähler 32 im Arbeitsspeicher 28 zuordnen lassen.

Der in Fig. 3 gezeigte Ablauf beginnt mit einem Initialisierungsschritt 54, bei dem der aktive Zähler AZ auf einen Startwert, im vorliegenden Ausführungsbeispiel den Wert Null, gesetzt wird. Nach dem Initialisierungsschritt 54 ist die in Fig. 3 gezeigte Programmstruktur identisch zu der von Fig. 2, weshalb in Fig. 3 dieselben Bezugszeichen wie in Fig. 2 verwendet werden. Die Unterschiede bestehen darin, daß in der Anweisung 44 der Basiszähler BZ auf den jeweiligen Stand des aktiven Zählers AZ gesetzt wird. Der Stand des Basiszählers BZ stellt somit in jedem Schleifendurchlauf den "Nullpunkt" dar, von dem der aktive Zähler AZ zu zählen beginnt.

In den Anweisungen 46.x und 52.x wird gemäß Fig. 3 der aktive Zähler AZ auf dieselbe Weise verändert wie in Fig. 2 der Zustandszähler ZZ. Schließlich wird in Test 48 die Differenz des aktiven Zählers AZ zum Basiszähler BZ mit dem zulässigen Wert N verglichen. Vorzugsweise wird in der tatsächlichen Programmierung des Tests 48 ein Vergleich mit dem stets konstanten Wert N vermieden, indem z.B. zunächst ein Zwischenergebnis BZ + N berechnet wird und dieses Zwischenergebnis dann mit dem Wert des aktiven Zählers AZ verglichen wird.

Von einem zum nächsten Schleifendurchlauf wird der aktive Zähler AZ nicht zurückgesetzt, sondern es wird nur in Anweisung 44 der durch den Basiszähler BZ definierte "Nullpunkt" neu festgelegt. Auf diese Weise ändern sich von Durchlauf zu Durchlauf die Werte der Zähler AZ und BZ, wodurch eine Ausspähung des Verfahrens von Fig. 3 sehr erschwert wird. In Varianten des Verfahrens von Fig. 3 kann der Wert des aktiven Zählers AZ nach dem Test 48 beliebig neu gesetzt werden. Ferner kann vorgesehen sein, die Rollen der Zähler 32 im Arbeitsspeicher 28, die den aktiven Zähler AZ und den Basiszähler BZ bilden, von Zeit zu Zeit zu vertauschen.

In Fig. 2 und Fig. 3 ist beispielhaft ein Modul 56 gezeigt, das die beiden kontrollierten Abschnitte 36.1 und 36.2 sowie die beiden zugeordneten Aussprungtests 42.1 und 42.2 zusammenfaßt. Fig. 4 zeigt dieses Modul 56 von Fig. 2 in einer weiteren Variante, die eine zusätzliche lokale Überprüfung der Veränderung des Zustandszählers ZZ während der Ausführung des Moduls 56 aufweist. Gemäß Fig. 4 wird dazu der Stand des Zustandszählers ZZ zu Beginn der Modulausführung in einem lokalen Basiszähler LBZ gesichert.

Nach der Abarbeitung der kontrollierten Abschnitte 36.1 und 36.2 sowie der entsprechenden Aussprungtests 42.1 und 42.2 erreicht die Programmausführung einen modulinternen Prüfpunkt 60. Hier wird in Test 62 überprüft, ob die Veränderung des Zustandszählers ZZ gegenüber dem bei Modulbeginn zwischengespeicherten Wert LBZ der Anzahl M der zwischenzeitlich ausgeführten kontrollierten Abschnitte 36.x entspricht; im vorliegenden Beispiel hat M den Wert 2. Weist die modulinterne Veränderung des Zustandszählers ZZ den zulässigen Wert auf, so wird die Programmausführung fortgesetzt; andernfalls wird eine modulinterne Routine zur Fehlerbehandlung 64 ausgeführt.

Die Ausführungsvariante von Fig. 4 kann auch bei dem Verfahren gemäß Fig. 3 mit einem differenziellen Zustandszähler eingesetzt werden. In diesem Fall wird in Schritt 58 im lokalen Basiszähler LBZ entweder der Wert des aktiven Zählers AZ oder die Differenz AZ - BZ gespeichert, und in Test 62 wird die Differenz dieses Wertes bzw. dieser Differenz mit dem Wert des lokalen Basiszählers LBZ gebildet.

Während bei der Überprüfung der modulinternen Veränderung in Fig. 4 der globale Zustandszähler ZZ weitergeschaltet wurde, ist es auch möglich, innerhalb eines Moduls 56 oder innerhalb eines kontrollierten Abschnitts 36.x einen weiteren, lokalen Zustandszähler einzuführen. Fig. 5 zeigt einen beispielhaften Ablauf dieser Ausführungsvariante, bei der ein kontrollierter Abschnitt 36.x von Fig. 2 nochmals mit einem lokalen Zustandszähler LZ gesichert ist.

Gemäß Fig. 5 wird der lokale Zustandszähler LZ in Schritt 66 mit dem Wert Null initialisiert. Es folgt die Ausführung mehrerer, im vorliegenden Beispiel dreier, kontrollierter Unterabschnitte 68.1, 68.2, 68.3, die zusammenfassend mit 68.x bezeichnet werden. In jedem der kontrollierten Unterabschnitte 68.x wird der lokale Zähler LZ in je einer Anweisung 70.x inkrementiert. Der zweite kontrollierte Unterabschnitt 68.2 weist einen, in Fig. 5 durch einen gestrichelten Pfeil dargestellten, bedingten Aussprung auf, durch den der Inkrementierungsschritt 70.2 sowie der dritte Unterabschnitt 68.3 übersprungen werden.

Nach der Abarbeitung des letzten kontrollierten Unterabschnitts 68.3 erreicht die Programmausführung einen lokalen Prüfpunkt 72. Zur Prüfung wird hier ein Test 74 ausgeführt, bei dem der Stand des lokalen Zählers LZ mit den zulässigen Werten 1 und 3 verglichen wird. Ergibt sich eine Übereinstimmung mit einem dieser Werte, so wird die Programmausführung mit der Anweisung 46.x zur Veränderung des globalen Zustandszählers ZZ fortgesetzt; anderenfalls erfolgt eine Fehlerbehandlung 76.

Auch zur Implementierung des lokalen Zählers LZ von Fig. 5 sind die oben bereits im Zusammenhang mit dem Zustandszähler ZZ beschriebenen Varianten möglich; insbesondere kann der lokale Zähler LZ ebenfalls als differenzieller Zähler ausgebildet sein. Wird das Verfahren von Fig. 5 in Kombination mit der Ausgestaltung von Fig. 3 eingesetzt, braucht lediglich die Zuweisung 46.x angepaßt zu werden.

Fig. 5 illustriert den Vergleich eines Zählers mit mehreren zulässigen Werten, der dann erforderlich ist, wenn unterschiedliche Programmlaufpfade ohne die entsprechenden Korrekturanweisungen 52.x vorgesehen sind. In manchen Ausführungsformen der Erfindung kann ein derartiger Vergleich mit mehreren zulässigen Werten auch für den globalen Zustandszähler ZZ eingesetzt werden; diese Ausgestaltung verringert jedoch die Zuverlässigkeit der Kontrolle und wird daher bevorzugt nur für lokale Zustandszähler LZ eingesetzt. Umgekehrt kann in weiteren Varianten auch der Aussprung im zweiten kontrollierten Unterabschnitt 68.2 über eine geeignete Korrekturanweisung verlaufen. In diesem Fall ist in Test 74 nur ein einziger Stand des lokalen Zählers LZ, nämlich der Zählerstand 3, zulässig.

## Patentansprüche

1. Verfahren zur kontrollierten Programmausführung durch einen tragbaren Datenträger (10), der einen Programmspeicher (26), einen Prozessorkern (14) und mindestens einen Zustandszähler (ZZ) aufweist, wobei der Programmspeicher (26) mindestens ein durch den Prozessorkern (14) ausführbares Programm (30) mit mehreren kontrollierten Abschnitten (36.x) aufweist, und wobei:
- bei der Ausführung jedes kontrollierten Abschnitts (36.x) der Stand des Zustandszählers (ZZ) verändert wird, um die Abarbeitung des jeweiligen kontrollierten Abschnitts (36.x) anzuzeigen, **dadurch gekennzeichnet**,
- bei der Ausführung eines Sprungbefehls (42.x), durch den ein oder mehrere kontrollierte Abschnitte (36.x) übersprungen werden, der Stand des Zustandszählers (ZZ) so verändert wird, als ob die übersprungenen kontrollierten Abschnitte (36.x) ausgeführt worden wären, und
- an mindestens einem Prüfpunkt (38, 60, 72) der Stand des Zustandszählers (ZZ) mit mindestens einem zulässigen Wert verglichen wird, wobei bei einer Übereinstimmung die Programmausführung fortgesetzt wird und bei einer Abweichung eine Fehlerbehandlung (50, 64, 76) erfolgt.

2. Verfahren nach Anspruch 1, **dadurch gekennzeichnet, daß** der Zustandszähler (ZZ) als differenzieller Zustandszähler ausgebildet ist, dessen Zählerstand der Differenz zwischen dem Stand eines aktiven Zählers (AZ) und eines Basiszählers (BZ) entspricht.

3. Verfahren nach Anspruch 1 oder Anspruch 2, **dadurch gekennzeichnet, daß** das Programm (30) als Schleife ausgebildet ist, die einen Startabschnitt (34), die mehreren kontrollierten Abschnitte (36.x) und einen Aktionsabschnitt (40) aufweist, wobei sich der Prüfpunkt (38) bzw. einer der Prüfpunkte zwischen dem letzten kontrollierten Abschnitt (36.N) und dem Aktionsabschnitt (40) befindet.

4. Verfahren nach den Ansprüchen 2 und 3, **dadurch gekennzeichnet, daß** vor der Ausführung der kontrollierten Abschnitte (36.x) der Basiszähler (BZ) auf den jeweiligen Stand des aktiven Zählers (AZ) gesetzt wird.

5. Verfahren nach einem der Ansprüche 1 bis 4, **dadurch gekennzeichnet, daß** das Programm (30) mindestens ein Modul (56) aufweist, das einen oder mehrere der kontrollierten Abschnitte (36.x) enthält.

6. VerfahrennachAnspruch5, **dadurch gekennzeichnet, daß** das Modul (56) ein kontrolliertes Modul ist, in dem an einem Prüfpunkt (60) die Veränderung des Zustandszählers (ZZ) innerhalb des Moduls (56) mit mindestens einem zulässigen Wert verglichen wird.

7. Verfahren nach Anspruch 6, **dadurch gekennzeichnet, daß** vor der jeweils ersten Veränderung des Zustandszählers (ZZ) in dem kontrollierten Modul (56) der Stand des Zustandszählers (ZZ) oder ein damit zusammenhängender Wert in einem lokalen Basiszähler (LBZ) zwischengespeichert wird.

8. Verfahren nach einem der Ansprüche 1 bis 7, **dadurch ge**- **kennzeichnet**, daß mindestens einer der kontrollierten Abschnitte (36.x) mehrere kontrollierte Unterabschnitte (68.x) aufweist, wobei bei der Ausführung jedes kontrollierten Unterabschnitts (68.x) der Stand eines lokalen Zählers (LZ) verändert wird, um die Abarbeitung des jeweiligen kontrollierten Unterabschnitts (68.x) anzuzeigen, und wobei an mindestens einem Prüfpunkt (72) der Stand des lokalen Zählers (LZ) mit mindestens einem zulässigen Wert verglichen wird.

9. Verfahren nach einem der Ansprüche 1 bis 8, **dadurch ge**- **kennzeichnet**, daß das Verfahren zur Abwehr von Lichtattacken dient, bei denen durch Lichteinwirkung der Stand eines Programmzählers (16) des Prozessorkerns (14) manipuliert wird.

10. Tragbarer Datenträger (10), insbesondere Chipkarte oder Chipmodul, mit einem Programmspeicher (26), einem Prozessorkern (14) und mindestens einem Zustandszähler (ZZ), wobei der Programmspeicher (26) mindestens ein durch den Prozessorkern (14) ausführbares Programm (30) mit mehreren kontrollierten Abschnitten (36.x) aufweist, **dadurch gekennzeichnet, daß**
der Programmspeicher (26) Befehle aufweist, um den Prozessorkern (14) zur Ausführung eines Verfahrens nach einem der Ansprüche 1 bis 9 zu veranlassen.

## Claims

1. Method for controlled program execution by a portable data carrier (10) comprising a program memory (26), a processor core (14) and at least one status counter (ZZ), wherein the program memory (26) comprises at least one program (30) executable by the processor core (14) and with a plurality of controlled sections (36.x), and wherein:
- the reading of the status counter (ZZ) is altered during execution of each controlled section (36.x) in order to reflect the processing of the respective controlled section (36.x),
**characterised in that**
- during execution of a jump instruction (42.x), as a result of which one or more controlled sections (36.x) are skipped, the reading of the status counter (ZZ) is altered as if the skipped controlled sections (36.x) had been executed, and
- the reading of the status counter (ZZ) is compared with at least one admissible value at at least one test point (38, 60, 72), wherein, on agreement, the program execution is continued, and in the event of a difference, error handling (50, 64, 76) takes place.

2. Method according to claim 1, **characterised in that** the status counter (ZZ) is configured as a differential status counter, of which the counter value corresponds to the difference between the values of an active counter (AZ) and of a base counter (BZ).

3. Method according to claim 1 or claim 2, **characterised in that** the program (30) is configured as a loop which comprises a starting section (34), the plurality of controlled sections (36.x), and an action section (40), the test point (38) or one of the test points being located between the last controlled section (36.N) and the action section (40).

4. Method according to claims 2 and 3, **characterised in that** the base counter (BZ) is set to the respective value of the active counter (AZ) before execution of the controlled sections (36.x).

5. Method according to any of claims 1 to 4, **characterised in that** the program (30) comprises at least one module (56) containing one or more of the controlled sections (36.x).

6. Method according to claim 5, **characterised in that** the module (56) is a controlled module in which the change of the status counter (ZZ) within the module (56) is compared at a test point (60) with at least one admissible value.

7. Method according to claim 6, **characterised in that** before the respective first change of the status counter (ZZ) in the controlled module (56) the reading of the status counter (ZZ) or a value connected therewith is buffered in a local base counter (LBZ).

8. Method according to any of claims 1 to 7, **characterised in that** at least one of the controlled sections (36.x) comprises a plurality of controlled sub-sections (68.x), the value of a local counter (LZ) being changed during execution of each controlled sub-section (68.x) to reflect the processing of the respective controlled sub-section (68.x), and the value of the local counter (LZ) being compared at at least one test point (72) with at least one admissible value.

9. Method according to any of claims 1 to 8, **characterised in that** the method is used for repelling light attacks in which the value of a program counter (16) of the processor core (14) is manipulated by the influence of light.

10. Portable data carrier (10), in particular a chip card or chip module, comprising a program memory (26), a processor core (14) and at least one status counter (ZZ), the program memory (26) comprising at least one program (30) which is executable by the processor core (14) and with a plurality of controlled sections (36.x),
**characterised in that**
the program memory (26) comprises commands to cause the processor core (14) to execute a method according to any of claims 1 to 9.

## Revendications

1. Procédé pour l'exécution contrôlée de programmes par un support de données portable (10) comprenant une mémoire de programme (26), un noyau de processeur (14) et au moins un compteur d'états (ZZ), dans lequel la mémoire de programme (26) comprend au moins un programme (30) exécutable par le noyau de processeur (14) comportant plusieurs sections contrôlées (36.x), et dans lequel :
- lors de l'exécution de chaque section contrôlée (36.x) l'état du compteur d'états (ZZ) est modifié pour signaler l'exécution de la section contrôlée respective (36.x),
**caractérisé en ce que**
- lors de l'exécution d'une instruction de saut (42.x) par l'intermédiaire de laquelle les une ou plusieurs section(s) contrôlée(s) (36.x) est/sont sautée(s), l'état du compteur d'états (ZZ) est modifié comme si les sections contrôlées ayant été sautées (36.x) avaient été exécutées, et
- en au moins un point de test (38, 60, 72) l'état du compteur d'états (ZZ) est comparé à au moins une valeur valide, dans lequel, lors d'une concordance, l'exécution du programme est poursuivie et lors d'une différence, un traitement d'erreur est effectué (50, 64, 76).

2. Procédé selon la revendication 1, **caractérisé en ce que** le compteur d'états (ZZ) est réalisé sous la forme d'un compteur d'états différentiel dont l'état de comptage correspond à la différence entre les états d'un compteur actif (AZ) et d'un compteur de base (BZ).

3. Procédé selon la revendication 1 ou la revendication 2, **caractérisé en ce que** le programme (30) est réalisé sous la forme d'une boucle, qui comprend une section de démarrage (34), la pluralité de sections contrôlées (36.x), et une section d'action (40), dans lequel le point de test (38) ou l'un des points de test se trouve entre la dernière section contrôlée (36.N) et la section d'action (40).

4. Procédé selon les revendications 2 et 3, **caractérisé en ce que**, préalablement à l'exécution des sections contrôlées (36.x), le compteur de base (BZ) est réglé à l'état actuel du compteur actif (AZ).

5. Procédé selon l'une quelconque des revendications 1 à 4, **caractérisé en ce que** le programme (30) comprend au moins un module (56) contenant une ou plusieurs des sections contrôlées (36.x).

6. Procédé selon la revendication 5, **caractérisé en ce que** le module (56) est un module contrôlé dans lequel, en un point de test (60), la modification du compteur d'états (ZZ), dans le module (56), est comparée à au moins une valeur valide.

7. Procédé selon la revendication 6, **caractérisé en ce que**, préalablement à la première modification respective du compteur d'états (ZZ), dans le module contrôlé (56), l'état du compteur d'états (ZZ) ou une valeur dépendant de celui-ci est mise en mémoire tampon dans un compteur de base local (LBZ).

8. Procédé selon l'une quelconque des revendications 1 à 7, **caractérisé en ce qu'**au moins une des sections contrôlées (36.x) comprend une pluralité de sous-sections contrôlées (68.x), dans lequel, lors de l'exécution de chaque sous-section contrôlée (68.x), l'état d'un compteur local (LZ) est modifié afin de signaler l'exécution de la sous-section contrôlée respective (68.x), et dans lequel l'état du compteur local (LZ) est comparé à au moins une valeur valide en au moins un point de test (72).

9. Procédé selon l'une quelconque des revendications 1 à 8, **caractérisé en ce que** le procédé est destiné à la protection contre des attaques optiques lors desquelles l'état d'un compteur de programme (16) du noyau de processeur (14) est manipulé par un effet optique.

10. Support de données portable (10), notamment une carte à puce ou un module à puce, comprenant une mémoire de programme (26), un noyau de processeur (14) et au moins un compteur d'états (ZZ), dans lequel la mémoire de programme (26) comprend au moins un programme (30) pouvant être exécuté par le noyau de processeur (14) et comportant une pluralité de sections contrôlées (36.x),
**caractérisé en ce que**
la mémoire de programme (26) contient des instructions destinées à faire en sorte que le noyau de processeur (14) exécute un procédé selon l'une quelconque des revendications 1 à 9.
